# EUROPEAN PATENT APPLICATION

(11) **EP 3 958 525 A1**
(43) Date of publication of application: **23.02.2022**
(21) Application number: 20791500.0
(22) Date of filing: 26.03.2020
(51) Int. Cl.: H04L 12/851

(54) **MEDIA PACKET FORWARDING METHOD, FORWARDING SERVER, AND STORAGE MEDIUM**

(30) Priority: 16.04.2019 CN 201910303532
(71) Applicant: TENCENT TECHNOLOGY (SHENZHEN) COMPANY LIMITED, Shenzhen, Guangdong 518057, (CN)
(72) Inventor: CHEN, Zexian, Shenzhen, Guangdong 518057 (CN)
(74) Representative: EP&C
(86) International application number: PCT/CN2020/081261
(87) International publication number: WO 2020/211614

(57) **Abstract**

Embodiments of the present application provide a media packet forwarding method and a forwarding server. The method comprises: a forwarding server, upon receiving an RTP media packet to be forwarded, determining a type of the RTP media packet; determining the priority of the RTP media packet according to the type of the RTP media packet; and selecting the RTP media packet having the higher priority from the received RTP media packet and an RTP media packet currently being forwarded, and forwarding the same.

## Description

This application claims priority to Chinese Patent Application No. 201910303532.5, entitled "MEDIA PACKET FORWARDING METHOD AND FORWARDING SERVER" and filed with the China National Intellectual Property Administration on April 16, 2019, which is incorporated by reference in its entirety.

### FIELD OF THE TECHNOLOGY

Embodiments of the present disclosure relate to the field of communication technologies, and in particular, to a media packet forwarding method, a forwarding server, and a storage medium.

### BACKGROUND OF THE DISCLOSURE

In an ordinary call scenario between two people, only a small number of types of media packets are involved, and there is a strict order between such media packets in the call. Therefore, the order and time of arrival of multiple types of media packets at a forwarding device may be determined by using strategy control, so that the forwarding device forwards the media packets according to the order. However, in a converged communication scenario, the service procedure of a voice call is relatively complex, in which not only various different types of media packets are involved, but also the different types of media packets may often be used concurrently.

### SUMMARY

A media packet forwarding method is provided according to an embodiment of the present disclosure. The method is performed by a forwarding server. The method includes:
receiving a to-be-forwarded RTP media packet;
determining a type of the to-be-forwarded RTP media packet;
determining a priority of the to-be-forwarded RTP media packet according to the type of the to-be-forwarded RTP media packet; and
forwarding an RTP media packet having a higher priority of the received to-be-forwarded RTP media packet and an RTP media packet being currently forwarded.

A forwarding server is provided according to an embodiment of the present disclosure. The forwarding server includes: a receiving module, an analysis module, a processing module and a forwarding module. The receiving module is configured to receive a to-be-forwarded RTP media packet. The analysis module is configured to determine a type of the to-be-forwarded RTP media packet. The processing module is configured to determine a priority of the to-be-forwarded RTP media packet according to the type of the to-be-forwarded RTP media packet. The forwarding module is configured to forward an RTP media packet having a higher priority of the received to-be-forwarded RTP media packet and an RTP media packet being currently forwarded.

In some embodiments, the forwarding module is further configured to:
mix the RTP media packet being currently forwarded and the received to-be-forwarded RTP media packet in a case that the priority of the RTP media packet being currently forwarded is equal to the priority of the received to-be-forwarded RTP media packet and the RTP media packet being currently forwarded and the received to-be-forwarded RTP media packet correspond to different source terminals; and
forward an RTP media packet obtained by mixing to a receiving terminal.

In some embodiments, the analysis module is configured to:
determine the type of the to-be-forwarded RTP media packet according to a PT field and a CSRC field in a packet header of the to-be-forwarded RTP media packet.

In some embodiments, a type of an RTP media packet at least includes a call voice packet, an IVR voice packet, and a DTMF packet; and the analysis module is configured to:
obtain a value of the PT field in the packet header of the to-be-forwarded RTP media packet;
determine that the to-be-forwarded RTP media packet is a DTMF packet in a case that the value of the PT field is a first preset value;
obtain a value of the CSRC field in the packet header of the to-be-forwarded RTP media packet in a case that the value of the PT field is a second preset value;
determine that the to-be-forwarded RTP media packet is an IVR voice packet in a case that the value of the CSRC field is a third preset value; and
determine that the to-be-forwarded RTP media packet is a call voice packet in a case that the value of the CSRC field is a fourth preset value.

A computing device is provided according to an embodiment of the present disclosure. The computing device includes a memory, a processor, and a computer program stored on the memory and executable by the processor. The processor, when executing the program, implements operations of the media packet forwarding method.

A computer-readable storage medium is provided according to an embodiment of the present disclosure. The computer-readable storage medium stores a computer program executable by a computer device. The program, when run on the computer device, causes the computer device to perform operations of the media packet forwarding method.

### BRIEF DESCRIPTION OF THE DRAWINGS

To describe the technical solutions in the embodiments of the present disclosure more clearly, the accompanying drawings required for describing the embodiments are briefly described in the following. Apparently, the accompanying drawings in the following description show only some embodiments of the present disclosure, and a person of ordinary skill in the art may still derive other accompanying drawings according to the accompanying drawings without creative efforts.
FIG. 1 is a schematic diagram of an application scenario according to an embodiment of the present disclosure;
FIG. 2 is a schematic diagram of an interface of a call application according to an embodiment of the present disclosure;
FIG. 3 is a diagram of a system architecture of a converged communication platform according to an embodiment of the present disclosure;
FIG. 4 is a schematic flowchart of a media packet forwarding method according to an embodiment of the present disclosure;
FIG. 5 is a schematic diagram of a packet header of an RTP media packet according to an embodiment of the present disclosure;
FIG. 6 is a schematic flowchart of determining a type of an RTP media packet according to an embodiment of the present disclosure;
FIG. 7 is a schematic flowchart of determining a type of an RTP media packet according to an embodiment of the present disclosure;
FIG. 8 is a schematic flowchart of determining a type of an RTP media packet according to an embodiment of the present disclosure;
FIG. 9 is a schematic flowchart of a media packet forwarding method according to an embodiment of the present disclosure;
FIG. 10 is a schematic flowchart of a media packet forwarding method according to an embodiment of the present disclosure;
FIG. 11 is a schematic flowchart of a media packet forwarding method according to an embodiment of the present disclosure;
FIG. 12 is a schematic flowchart of a media packet forwarding method according to an embodiment of the present disclosure;
FIG. 13 is a schematic structural diagram of a forwarding server according to an embodiment of the present disclosure; and
FIG. 14 is a schematic structural diagram of a computing device according to an embodiment of the present disclosure.

### DESCRIPTION OF EMBODIMENTS

To make the objectives, technical solutions, and advantageous effects of the present disclosure clearer, the present disclosure is described in detail in the following with reference to the accompanying drawings and the embodiments. It is to be understood that the specific embodiments described herein are merely used to explain the present disclosure but are not intended to limit the present disclosure.

To facilitate understanding, terms involved in the embodiments of the present disclosure are explained hereafter.

Converged communication refers to the convergence of communication technology and information technology. Services of the communication technology include various types of services in a conventional telecommunication network, such as a telephone service, a short message service, a conference phone, and a call center. Services of the information technology include various types of IP services such as instant messaging (IM), video and application sharing services such as video monitoring, information sharing and a download service, and Internet services such as an email and a voice email.

PSTN is the abbreviation for Public switched telephone network, which is a common old telephone system, that is, a telephone network commonly used in our daily life.

RTP is the abbreviation for Real-time Transport Protocol, which is a network transport protocol. The RTP is published in RFC 1889 by a multimedia transport group of IETF in 1996, and is updated in RFC 3550.

DTMF is the abbreviation for Dual Tone Multi Frequency, which is a type of user signaling between telephone sets and exchanges in a telephone system and is generally configured to transmit a called number.

RFC 2833 is a mainstream transmission manner of the DTMF, which is an in-band detection manner. In this manner, the DTMF signal is transmitted by the RTP, and a data packet of the RFC 2833 is marked by using special rtpPayloadType, that is, TeleponeEvent.

In practice, it is found by an inventor of the present disclosure that in a conventional public switched telephone network, there are few calling parties and a small number of types of media packets are involved. For example, during communication between two parties of users, only two types of media packets are involved, including a call media packet and an interactive voice response (which is called IVR for short) packet. During a call, a preset strategy is used to control that an IVR voice is played only before a receiving party answers the call, and the playing of the IVR voice ends after the call is answered. In this case, the two channels of media packets cannot arrive at a forwarding device concurrently, so that the forwarding device is required to only forward a received media packet. However, in a converged communication scenario, the service flow of a voice call is relatively complex, which may involve multiple parties, for example, in a multi-party telephone conference. Further, various different types of media packets are involved, including for example, a voice media packet such as a call voice and an IVR voice, and a non-voice media packet such as a DTMF signal. The different types of media packets may often be used concurrently, so that a converged communication platform cannot control an order in which all media packets arrive at the forwarding device by using a strategy. In particular, for the DTMF signal that is triggered on a user terminal, the user may trigger the signal in the entire call, which has relatively great randomness and cannot be controlled by using the strategy. In this case, multiple channels of media packets may arrive at the forwarding device concurrently, and the forwarding device concurrently forwards the multiple channels of media packets to a receiving party, resulting in the receiving party hearing no sound which is caused by the fact that the receiving terminal cannot parse the multiple channels of media packets.

In the case that the multiple channels of media packets concurrently arrives at the forwarding server, the forwarding server directly forwards the media packets without processing, so that the receiving party hears no sound. In view of this, the following solutions are provided as follows in the embodiments of the present disclosure. After receiving a to-be-forwarded RTP media packet, the forwarding server determines a type of the to-be-forwarded RTP media packet, determines a priority of the to-be-forwarded RTP media packet according to the type of the to-be-forwarded RTP media packet, and preferentially forwards an RTP media packet having a highest priority among all received to-be-forwarded RTP media packets, so that the forwarding server forwards only one channel of media packet to a receiving terminal, avoiding that the receiving terminal hears no sound which is caused by the fact that the receiving terminal cannot parse the multiple channels of media packets.

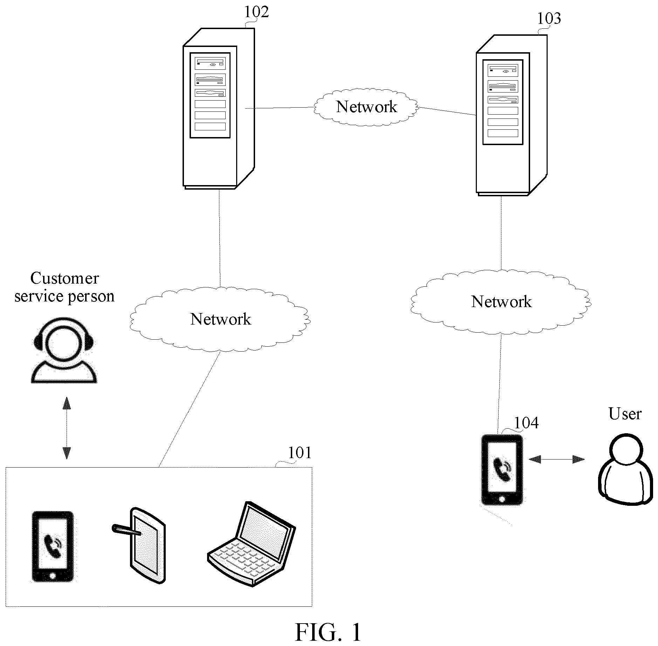

A media packet forwarding method in the embodiments of the present disclosure is applicable to a converged communication scenario, such as a call center, a multi-party telephone conference, and a video conference. For example, in a call center scenario as shown in FIG. 1, a call center device 101, a converged communication platform 102, an operator server 103, and a user terminal 104 are included.

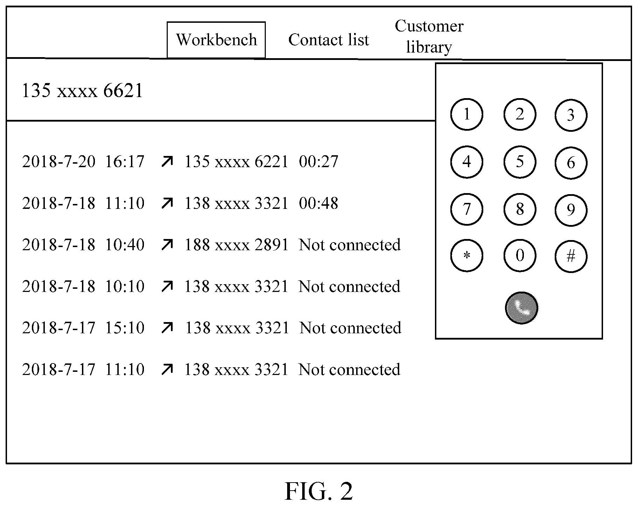

The call center device 101 is an electronic device having a network communication function. The electronic device may be a smartphone, a tablet computer, a portable personal computer, or the like. A call application is installed on the call center device 101 in advance. A customer service person may input a phone number of a user in a dialing keyboard displayed in the call application, and then click a dialing button. For example, as shown in FIG. 2, functions of the call application include a workbench, a contact list, and a customer library. When the customer service person clicks a workbench option, a workbench interface is displayed. The workbench interface includes a dialing keyboard and a call record. The customer service person may click a dialing keyboard interface to input a phone number of a user, where the workbench interface displays the phone number of the user dialed by the customer service person. The customer service person clicks the dialing button to call the user. In addition, the customer service person may click a contact list option to inquire the contact list about a phone number of a user, and may click the phone number of the user in the contact list to call the user.

The call center device 101 transmits a call request carrying the phone number of the user to the converged communication platform 102. The converged communication platform 102 transmits the call request to the operator server 103. The operator server 103 forwards the call request to the user terminal 104 according to the phone number of the user. During the call, the converged communication platform 102 may forward a call voice media stream between the customer service person and the user. Further, the converged communication platform 102 may provide an IVR voice service and a DTMF service. The converged communication platform 102 transmits an IVR voice media stream to the operator server 103. The operator server 103 forwards the IVR voice media stream to the user terminal 104, so that an IVR voice is played on the user terminal 104. When the user inputs different keys according to a prompt of the IVR voice, the converged communication platform 102 determines a DTMF media stream according to the key input of the user, and then determines to process a next requirement of the user according to the DTMF media stream. The converged communication platform 102 may be a server, a server cluster formed by several servers, or a cloud computing center. The user terminal 104 may be a smartphone. The call center device 101 is connected to the converged communication platform 102 via a wireless network. The converged communication platform 102 is connected to the operator server 103 via a wireless network. The operator server 103 is connected to the user terminal 104 via a wireless network.

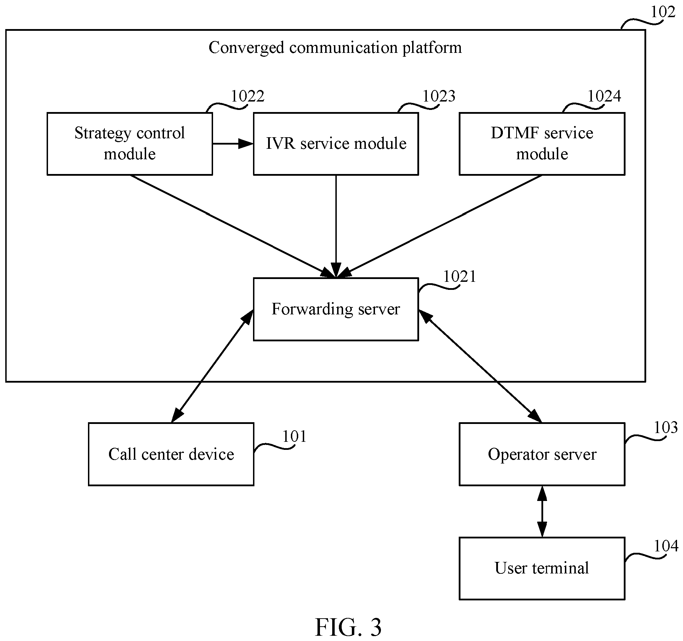

Further, in the application scenario shown in FIG. 1, a system architecture of the converged communication platform 102 is shown in FIG. 3. The converged communication platform 102 includes a forwarding server 1021, a strategy control module 1022, an IVR service module 1023, and a DTMF service module 1024.

The call center device 101 transmits a call voice media stream of the customer service person to the forwarding server 1021. The IVR service module 1023 generates an IVR voice media stream, and transmits the IVR voice media stream to the forwarding server 1021. The DTMF service module 1024 generates a DTMF media stream, and transmits the DTMF media stream to the forwarding server 1021. When establishing a call, the strategy control module 1022 may control an order in which the call voice media stream and the IVR voice media stream arrive at the forwarding server 1021. For example, an IVR voice is firstly played, and a call is then made. However, during the call, the call voice media stream, the IVR voice media stream, and a DTMF signal may concurrently arrive at the forwarding server 1021. After concurrently receiving multiple channels of media streams, the forwarding server 1021 forwards a media stream having a highest priority, and discards a media stream having a low priority, so that the operator server 103 forwards only one channel of media stream to the user terminal 104, avoiding that the user hears no sound which is caused by the fact that the user terminal 104 cannot parse the multiple channels of media streams.

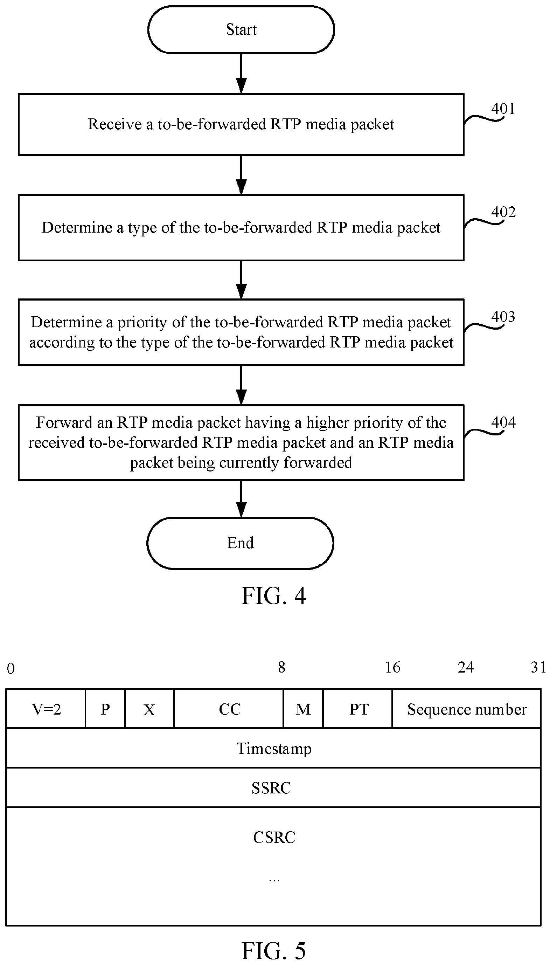

Based on the application scenario shown in FIG. 1 and the system architecture of the converged communication platform shown in FIG. 3, a flow of a media packet forwarding method is provided according to an embodiment of the present disclosure. The flow of the method may be performed by a forwarding server. As shown in FIG. 4, the method includes the following steps S401 to S404.

In step S401, a to-be-forwarded real-time transport protocol RTP media packet is received.

In step S402, a type of the to-be-forwarded RTP media packet is determined.

Specifically, an RTP media packet is a media packet forwarded by using the RTP protocol. The RTP media packet may be classified into different types according to different classification rules. For example, the RTP media packet may be classified into three types: a call voice packet, an IVR voice packet, and a DTMF packet. The RTP media packet may also be classified into two types: a voice packet and a non-voice packet. The RTP media packet may also be classified into two types: a call voice packet and a non-call voice packet.

In step S403, a priority of the to-be-forwarded RTP media packet is determined according to the type of the to-be-forwarded RTP media packet.

In some embodiments, a priority of each type of RTP media packet is preset. For example, in the case that the RTP media packet is classified into three types: a call voice packet, an IVR voice packet, and a DTMF packet, the IVR voice packet may be set to have a first priority since the IVR voice packet is generally used for controlling a call flow. In the current mainstream RFC 2833 manner, a priority of the DTMF packet is higher than that of the call voice packet, thus the DTMF packet may be set to have a second priority, and the call voice packet is set to have a third priority. In another example, in the case that the RTP media packet is classified into two types: a voice packet and a non-voice packet, the voice packet may be set to have a first priority, and the non-voice packet may be set to have a second priority. In another example, in the case that the RTP media packet is classified into two types: a call voice packet and a non-call voice packet, the call voice packet may be set to have a first priority, and the non-call voice may be set to have a second priority. After the type of the to-be-forwarded RTP media packet is determined, a priority of the to-be-forwarded RTP media packet may be determined by querying preset priorities according to the type of the to-be-forwarded RTP media packet.

For example, in the case that the RTP media packet is classified into three types: a call voice packet, an IVR voice packet, and a DTMF packet, if the to-be-forwarded RTP media packet is a call voice packet, a type of the to-be-forwarded RTP media packet is the call voice packet, and a priority of the call voice packet may be determined as a third priority according to the type of the to-be-forwarded RTP media packet.

For example, in the case that the RTP media packet is classified into two types: a voice packet and a non-voice packet, if the to-be-forwarded RTP media packet is a call voice packet, a type of the to-be-forwarded RTP media packet is the voice packet, and a priority of the voice packet may be determined as a first priority according to the type of the to-be-forwarded RTP media packet.

For example, in the case that the RTP media packet is classified into two types: a call voice packet and a non-call voice packet, if the to-be-forwarded RTP media packet is a call voice packet, a type of the to-be-forwarded RTP media packet is the voice packet, and a priority of the call voice packet may be determined as a first priority according to the type of the to-be-forwarded RTP media packet.

In step S404, an RTP media packet having a higher priority of the received to-be-forwarded RTP media packet and an RTP media packet being currently forwarded is forwarded.

In some embodiments, in a case that a priority of the RTP media packet being currently forwarded is higher than the priority of the received to-be-forwarded RTP media packet, the received to-be-forwarded RTP media packet is discarded. The priority of the RTP media packet being currently forwarded is indicated by priority indication information. Further, in a case that the priority of the RTP media packet being currently forwarded is lower than the priority of the received to-be-forwarded RTP media packet, the RTP media packet being currently forwarded is discarded, and the received to-be-forwarded RTP media packet is forwarded.

In a specific implementation, when the forwarding server receives a to-be-forwarded RTP packet, another to-be-forwarded RTP packet may be currently forwarded by the forwarding server. In this case, a priority of the received to-be-forwarded RTP packet is compared with a priority of the RTP media packet being currently forwarded, to determine an RTP media packet having a higher priority. Then, the RTP media packet having the higher priority is forwarded, so that an RTP media packet having a highest priority is forwarded every time.

After receiving multiple channels of media packets, the forwarding server preferentially forwards an RTP media packet having a highest priority, so that the forwarding server forwards only one channel of media packet to a receiving terminal, avoiding that the receiving terminal hears no sound which is caused by the fact that the receiving terminal cannot parse the multiple channels of media packets, thereby ensuring the normal user call and improving the user experience.

In some embodiments, in step S402, the type of the to-be-forwarded RTP media packet may be determined by at least the following three implementations in the embodiments of the present disclosure.

In a possible implementation, the type of the to-be-forwarded RTP media packet is determined according to a PT field and a CSRC field in a packet header of the to-be-forwarded RTP media packet.

Specifically, a format of a packet header of an RTP media packet is shown in FIG. 5. The packet header of the RTP media packet includes a PT field. A voice packet and a non-voice packet may be distinguished from each other by using a value of the PT field. For example, values of PT fields respectively corresponding to the voice packet and the DTMF packet are determined in a signaling negotiation phase, and thus the voice packet and the DTMF packet are distinguished from each other according to the value of the PT field.

The voice packet may be further classified into different types, for example, a call voice packet and an IVR voice packet. The call voice packet and the IVR voice packet use a common value of a PT field, and are required to be further distinguished from each other. In this embodiment of the present disclosure, different types of voice packets are distinguished from each other by using a value of a CSRC field. The CSRC is originally used for identifying sources of all RTP packets contributing to a new packet generated by using an RTP mixer, and the call voice packet does not include the field. In this case, the call voice packet and the non-call voice packet may be distinguished from each other by using a value of the CSRC field. For example, a CSRC field in an IVR voice packet is defined as CSRC=0xFFFFFFFE. In order to clearly indicate that one channel of IVR voice already ends an ending packet is defined, where CSRC=0xFFFFFFFE. The call voice packet and the IVR voice packet may be distinguished from each other according to the value of the CSRC field.

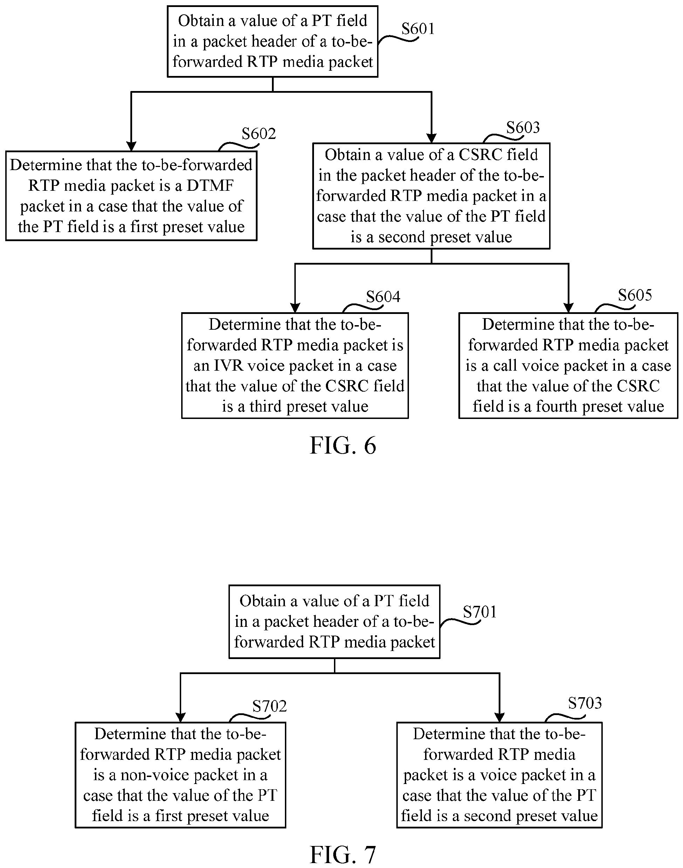

For example, as shown in FIG. 6, in a case that a type of an RTP media packet includes a call voice packet, an IVR voice packet, and a DTMF packet, the type of the received to-be-forwarded RTP media packet is determined by performing the following steps S601 to S605.

In step S601, a value of the PT field in the packet header of the to-be-forwarded RTP media packet is obtained.

In step S602, in a case that the value of the PT field is a first preset value, it is determined that the to-be-forwarded RTP media packet is a DTMF packet.

In step S603, in a case that the value of the PT field is a second preset value, a value of the CSRC field in the packet header of the to-be-forwarded RTP media packet is obtained.

In step S604, in a case that the value of the CSRC field is a third preset value, it is determined that the to-be-forwarded RTP media packet is an IVR voice packet.

In step S605, in a case that the value of the CSRC field is a fourth preset value, it is determined that the to-be-forwarded RTP media packet is a call voice packet.

In a possible implementation, the type of the to-be-forwarded RTP media packet is determined according to a PT field in a packet header of the to-be-forwarded RTP media packet.

In the case that the RTP media packet is classified into a voice packet and a non-voice packet, the type of the to-be-forwarded RTP media packet may be directly determined according to a value of the PT field. For example, as shown in FIG. 7, in a case that a type of an RTP media packet includes a voice packet and a non-voice packet, the type of the received to-be-forwarded RTP media packet is determined by performing the following steps S701 to S703.

In step S701, a value of the PT field in the packet header of the to-be-forwarded RTP media packet is obtained.

In step S702, in a case that the value of the PT field is a first preset value, it is determined that the to-be-forwarded RTP media packet is a non-voice packet.

In step S703, in a case that the value of the PT field is a second preset value, it is determined that the to-be-forwarded RTP media packet is a voice packet.

In a possible implementation, the type of the to-be-forwarded RTP media packet is determined according to a CSRC field in a packet header of the to-be-forwarded RTP media packet.

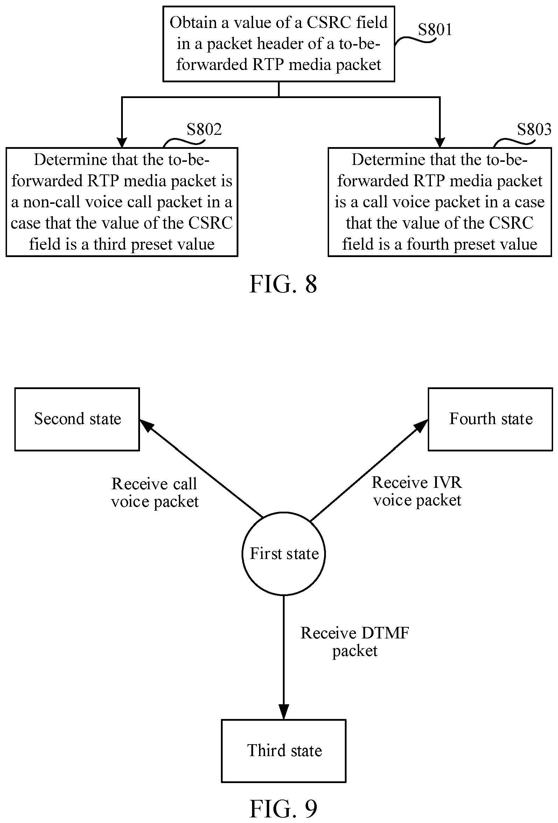

In the case that the RTP media packet is classified into a call voice packet and a non-call voice packet, the type of the to-be-forwarded RTP media packet may be directly determined according to a value of the CSRC field. For example, as shown in FIG. 8, in a case that a type of an RTP media packet includes a call voice packet and a non-call voice packet, the type of the to-be-forwarded RTP media packet is determined by performing the following steps S801 to S803.

In step S801, a value of the CSRC field in the packet header of the to-be-forwarded RTP media packet is obtained.

In step S802, in a case that the value of the CSRC field is a third preset value, it is determined that the to-be-forwarded RTP media packet is a non-call voice packet.

In step S803, in a case that the value of the CSRC field is a fourth preset value, it is determined that the to-be-forwarded RTP media packet is a call voice packet.

A media packet is distinguished from another by using a specific field in a packet header of the media packet. In this case, after receiving a to-be-forwarded media packet, the forwarding server may determine a type of the to-be-forwarded media packet according to a value of a specific field in a packet header of the to-be-forwarded media packet, and further determine a priority of the to-be-forwarded media packet, to facilitate determining of a media packet that is to be forwarded according to the priority of the to-be-forwarded media packet.

In some embodiments, in step S404, the forwarding server may forward an RTP media packet having a higher priority of the received to-be-forwarded RTP media packet and the RTP media packet being currently forwarded according to the following rules.

If a priority of the RTP media packet being currently forwarded is higher than the priority of the received to-be-forwarded RTP media packet, the received to-be-forwarded RTP media packet is discarded.

For example, a priority of an IVR voice packet is higher than a priority of a DTMF packet. If the RTP media packet being currently forwarded is an IVR voice packet, and the received to-be-forwarded RTP media packet is a DTMF packet, the received DTMF packet is discarded.

If the priority of the RTP media packet being currently forwarded is lower than the priority of the received to-be-forwarded RTP media packet, the RTP media packet being currently forwarded is discarded, and the received to-be-forwarded RTP media packet is forwarded.

For example, a priority of a DTMF packet is higher than a priority of a call voice packet. If the RTP media packet being currently forwarded is a call voice packet, and the received to-be-forwarded RTP media packet is a DTMF packet, the call voice packet being currently forwarded is discarded, and the received DTMF packet is forwarded.

For example, if the forwarding server is currently in an initial state, and the received to-be-forwarded RTP media packet is a call voice packet, the received call voice packet is forwarded.

After receiving a to-be-forwarded media packet, the forwarding server determines a media packet that is to be preferentially forwarded according to priorities of a media packet being currently forwarded and the received to-be-forwarded media packet, so that the forwarding server forwards only one channel of media packet, avoiding that the user terminal hears no sound which is caused by the fact that the user terminal receives multiple channels of media packets and cannot parse the multiple channels of media packets.

In some embodiments, before determining a priority relationship between the media packet being currently forwarded and the received to-be-forwarded media packet, the forwarding server may determine the priority of the RTP media packet being currently forwarded according to priority indication information. The priority indication information is used for indicating the priority of the RTP media packet being currently forwarded. For example, when the forwarding server is currently forwarding an IVR voice packet, current priority indication information of the forwarding server indicates a priority of the IVR voice packet. In addition, if the forwarding server is in an initial state, current priority indication information of the forwarding server indicates a priority of the initial state. Generally, the priority of the initial state is a lowest priority.

If the RTP media packet being currently forwarded by the forwarding server changes, the priority indicated by the current priority indication information of the forwarding server is updated accordingly.

In a possible implementation, if the priority of the RTP media packet being currently forwarded is lower than the priority of the received to-be-forwarded RTP media packet, the forwarding server discards the RTP media packet being currently forwarded, forwards the received to-be-forwarded RTP media packet, and updates the priority indication information according to the priority of the received to-be-forwarded RTP media packet.

For example, if the RTP media packet being currently forwarded is a call voice packet and the received to-be-forwarded RTP media packet is a DTMF packet, the call voice packet is discarded, the DTMF packet is forwarded, and the current priority indication information of the forwarding server is updated to indicate the priority of the DTMF packet.

For example, if the current priority indication information of the forwarding server indicates the priority of the initial state and the received to-be-forwarded RTP media packet is a call voice packet, the current priority indication information of the forwarding server is updated to indicate the priority of the call voice packet.

In some embodiments, if the priority of the RTP media packet being currently forwarded is higher than the priority of the received to-be-forwarded RTP media packet, the received to-be-forwarded RTP media packet is discarded, and the RTP media packet being forwarded continues to be forwarded. Because the RTP media packet being forwarded does not change, the priority indication information is not updated.

For example, if the RTP media packet being currently forwarded is an IVR voice packet, and the received to-be-forwarded RTP media packet is a DTMF packet, the priority indication information is not updated.

By setting the priority indication information of the forwarding server to indicate a priority of an RTP media packet being currently forwarded, the forwarding server, after receiving a to-be-forwarded media packet, can quickly determine the priority of the RTP media packet being currently forwarded according to the priority indication information, and further compare the priority of the RTP media packet being currently forwarded with a priority of the received to-be-forwarded RTP media packet, to determine an RTP media packet that is to be preferentially forwarded, improving the media packet forwarding efficiency.

In some embodiments, in the case that the priority of the RTP media packet being currently forwarded by the forwarding server is higher than the priority of received to-be-forwarded RTP media packet, the priority indication information is not updated. In this case, after the forwarding of the RTP media packet being currently forwarded ends, the priority indicated by the priority indication information is lowered, in order to avoid that, the received to-be-forwarded RTP media packets is still discarded after a to-be-forwarded RTP media packet having a priority lower than the priority indicated by the current priority indication information is received. In view of this, the following at least two implementations for lowering the priority indicated by the priority indication information are provided according to embodiments of the present disclosure.

In a possible implementation, a quantity of received to-be-forwarded RTP media packets that are discarded is accumulated. In a case that the accumulated quantity is greater than a preset threshold, the priority indicated by the priority indication information is lowered, and the quantity of received to-be-forwarded RTP media packets that are discarded is re-accumulated.

In some embodiments, the process of lowering the priority indicated by the priority indication information in the case that the accumulated quantity is greater than the preset threshold may be performed by adjusting the priority indicated by the priority indication information to a lowest priority, or a priority lower than a current priority indicated by the priority indication information, or a priority of a currently received to-be-forwarded RTP media packet.

Specifically, in the case that the priority of the RTP media packet being currently forwarded is higher than the priority of the received to-be-forwarded RTP media packet, the received to-be-forwarded RTP media packet is discarded, and the accumulated value is increased by 1. The above process is repeated until the accumulated value is greater than a preset threshold. When the accumulated value is greater than the preset threshold, the priority indicated by the priority indication information may be adjusted to a priority slightly lower than the current priority. The priority indicated by the priority indication information may also be adjusted to a lowest priority. Further, the priority indicated by the priority indication information may also be adjusted to another preset priority, for example, a priority of a currently received to-be-forwarded RTP media packet.

For example, it is assumed that an RTP media packet has four priorities, including a first priority, a second priority, a third priority, and a fourth priority which are ranked in an order from highest to lowest. It is assumed that the current priority indication information indicates the first priority. In a case that the accumulated value is greater than the preset threshold, the priority indication information may be updated to indicate the second priority. The priority indication information may also be updated to indicate the fourth priority. Further, the priority indication information may also be updated to indicate the third priority. As described above, if the priority of the RTP media packet being currently forwarded is higher than the priority of the received to-be-forwarded RTP media packet, the received to-be-forwarded RTP media packet is discarded, and the quantity of received to-be-forwarded RTP media packets that are discarded is accumulated. In this case, if the accumulated value is greater than the preset threshold, the priority indicated by the priority indication information is lowered. In this way, if an ending packet of the media stream being currently forwarded is lost, the priority indicated by the priority indication information can still be lowered, avoiding that the priority indication information always indicates a high priority, which affects forwarding of a media packet having a low priority.

In a possible implementation, in a case that the received to-be-forwarded RTP media packet includes a session end identifier, the priority indicated by the priority indication information to a lowest priority.

Specifically, after the forwarding of a media stream ends, an RTP media packet carrying a session end identifier is used to identify that transmission of the media stream ends. For example, an ending packet is defined in an IVR voice, and a session end identifier is expressed as CSRC=0xFFFFFFFF. When the forwarding server receives an IVR voice packet containing the session end identifier CSRC=OxFFFFFFFF, the priority indicated by the current priority indication information is adjusted to a lowest priority. In this way, if the received to-be-forwarded RTP media packet contains a session end identifier, which indicates that the forwarding of the media packet being currently forwarded ends. In this case, the priority indicated by the priority indication information is adjusted to a lowest priority, to facilitate smooth forwarding of a media packet of another type.

In some embodiments, in step S404, in the case that the priority of the RTP media packet being currently forwarded is equal to the priority of the received to-be-forwarded RTP media packet, the following two implementations for forwarding an RTP media packet are provided at least according to embodiments of the present disclosure.

In a possible implementation, in a case that the priority of the RTP media packet being currently forwarded is equal to the priority of the received to-be-forwarded RTP media packet and the RTP media packet being currently forwarded and the received to-be-forwarded RTP media packet correspond to different source terminals, the RTP media packet being currently forwarded is mixed with the received to-be-forwarded RTP media packet, and an RTP media packet obtained by mixing is forwarded to a receiving terminal.

For example, it is assumed that RTP media packet is classified into two types: a voice packet and a non-voice packet. If the to-be-forwarded RTP media packet is an IVR voice packet and the RTP media packet being currently forwarded is a call voice packet, the RTP media packet being currently forwarded and the received to-be-forwarded RTP media packet both have the type of the voice packet, and both have a priority corresponding to the voice packet. Because the IVR voice packet and the call voice packet corresponding to different source terminals and are two channels of RTP media packets, the IVR voice packet and the call voice packet are mixed into one channel of RTP media packet, and the one channel of RTP media packet obtained by mixing is forwarded to a receiving terminal. In this case, the receiving terminal can hear both an IVR voice and a call voice.

For example, it is assumed that the RTP media packet is classified into three types: a call voice packet, an IVR voice packet, and a DTMF packet. If the to-be-forwarded RTP media packet is a call voice packet A transmitted by a user terminal 1 and the RTP media packet being currently forwarded is a call voice packet B transmitted by a user terminal 2, the RTP media packet being currently forwarded and the received to-be-forwarded RTP media packet both have the type of call voice packet, and both have a priority corresponding to the call voice packet. Because a source terminal corresponding to the call voice packet A is the user terminal 1 and a source terminal corresponding to the call voice packet B is the user terminal 2, the call voice packet A and the call voice packet B are RTP media packets of two channels. In this case, the call voice packet A and the call voice packet B are mixed into one channel of RTP media packet, and the one channel of RTP media packet obtained by mixing is forwarded to a receiving terminal. In this way, the receiving terminal can hear both a user of the user terminal 1 and a user of the user terminal 2 speak.

In a possible implementation, in a case that the priority of the RTP media packet being currently forwarded is equal to the priority of the received to-be-forwarded RTP media packet and the RTP media packet being currently forwarded and the received to-be-forwarded RTP media packet correspond to the same source terminal, the received to-be-forwarded RTP media packet is forwarded after the forwarding of the RTP media packet being currently forwarded ends.

For example, it is assumed that RTP media packet is classified into three types: a call voice packet, an IVR voice packet, and a DTMF packet. If the to-be-forwarded RTP media packet is a call voice packet A transmitted by a user terminal 1 and the RTP media packet being currently forwarded is a call voice packet B transmitted by the user terminal 1, the RTP media packet being currently forwarded and the received to-be-forwarded RTP media packet both have the type of call voice packet, and both have a priority corresponding to the call voice packet. The call voice packet A and the call voice packet B correspond to the same source terminal, i.e., the user terminal 1, and are RTP media packets of the same channel. In this case, the call voice packet B is firstly forwarded to a receiving terminal, and the call voice packet A is then forwarded to the receiving terminal. In this way, the receiving terminal can hear a user of the user terminal 1 speak.

In the case that RTP media packets of different channels have the same priority, the RTP media packets of different channels that have the same priority are mixed, avoiding a problem that the RTP media packets of different channels that have the same priority are directly forwarded to a user terminal and the user terminal cannot parse the media packets of the multiple channels.

To better explain the embodiments of the present disclosure, a media packet forwarding method provided in an embodiment of the present disclosure is described below with reference to a specific implementation scenario. The method is performed by a forwarding server. It is assumed that, an RTP media packet is classified into three types: a call voice packet, an IVR voice packet, and a DTMF packet. A priority of the IVR voice packet is higher than a priority of the DTMF packet, and the priority of the DTMF packet is higher than a priority of the call voice packet. The forwarding server has four states, including a first state, a second state, a third state, and a fourth state. The first state indicates an initial state. The second state indicates that, a call voice packet is being forwarded, and current priority indication information of the forwarding server indicates the priority of the call voice packet. The third state indicates that, a DTMF packet is being forwarded, and current priority indication information of the forwarding server indicates the priority of the DTMF packet. The fourth state indicates that, an IVR voice packet is being forwarded, and current priority indication information of the forwarding server indicates the priority of the IVR voice packet. A type of a to-be-forwarded RTP media packet is determined according to values of a PT field and a CSRC field in a packet header of the to-be-forwarded RTP media packet. In each of the four states, the forwarding server performs different processing according to different priorities of the received to-be-forwarded RTP media packet.

As shown in FIG. 9, a current state of the forwarding server is the first state. In a case of receiving an IVR voice packet, the forwarding server switches from the first state to the fourth state, updates the current priority indication information to indicate the priority of the IVR voice packet, and forwards the IVR voice packet. Further, in a case of receiving a DTMF packet, the forwarding server switches from the first state to the third state, updates the current priority indication information to indicate the priority of the DTMF packet, and forwards the DTMF packet. Furthermore, in a case of receiving a call voice packet, the forwarding server switches from the first state to the second state, updates the current priority indication information to indicate the priority of the call voice packet, and forwards the call voice packet.

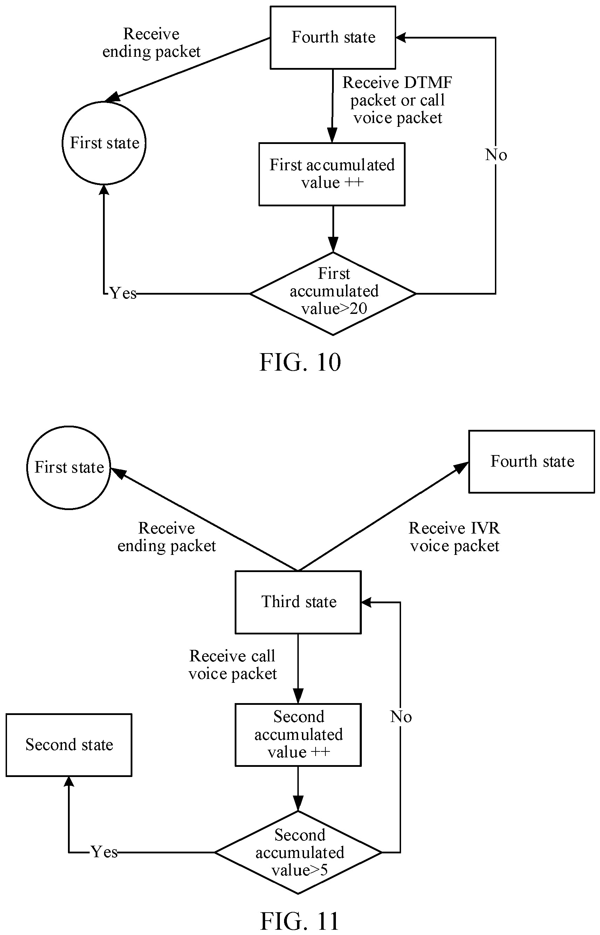

As shown in FIG. 10, a current state of the forwarding server is the fourth state. In a case of receiving a DTMF packet, because the priority of the DTMF packet is lower than the priority of the IVR voice packet, the received DTMF packet is discarded, and a first accumulated value is increased by 1. It is determined whether the first accumulated value is greater than a first preset threshold, where the first preset threshold is set to 20. If the first accumulated value is greater than the first preset threshold, the forwarding server switches from the fourth state to the first state, updates the current priority indication information to indicate a priority of the initial state, otherwise the forwarding server continues forwarding the IVR voice packet. Further, in a case of receiving a call voice packet, because the priority of the call voice packet is lower than the priority of the IVR voice packet, the received call voice packet is discarded, and a first accumulated value is increased by 1. It is determined whether the first accumulated value is greater than a first preset threshold, where the first preset threshold is set to 20. If the first accumulated value is greater than the first preset threshold, the forwarding server switches from the fourth state to the first state, updates the current priority indication information to indicate a priority of the initial state, otherwise the forwarding server continues forwarding the IVR voice packet. Furthermore, in a case of receiving an ending packet, the forwarding server switches from the fourth state to the first state, and updates the current priority indication information to indicate a priority of the initial state.

As shown in FIG. 11, a current state of the forwarding server is the third state. In a case of receiving an IVR voice packet, because the priority of the IVR voice packet is higher than the priority of the DTMF packet, the forwarding server switches from the third state to the fourth state, updates the current priority indication information to indicate the priority of the IVR voice packet, discards the DTMF packet being forwarded, and forwards the IVR voice packet. Further, in a case of receiving a call voice packet, because the priority of the call voice packet is lower than the priority of the DTMF packet, the received call voice packet is discarded, and a second accumulated value is increased by 1. It is determined whether the second accumulated value is greater than a second preset threshold, where the second preset threshold is set to 5. If the second accumulated value is greater than the second preset threshold, the forwarding server switches from the third state to the second state, updates the current priority indication information to indicate the priority of the call voice packet, otherwise the forwarding server continues forwarding the DTMF packet. Furthermore, in a case of receiving an ending packet, the forwarding server switches from the third state to the first state, and updates the current priority indication information to indicate a priority of the initial state.

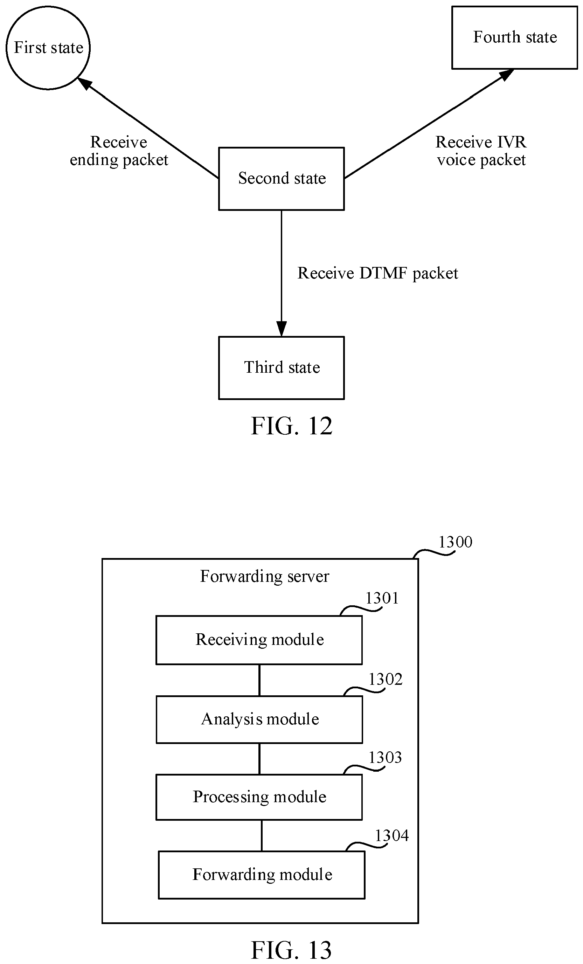

As shown in FIG. 12, a current state of the forwarding server is the second state. In a case of receiving an IVR voice packet, because the priority of the IVR voice packet is higher than the priority of the call voice packet, the forwarding server switches from the second state to the fourth state, updates the current priority indication information to indicate the priority of the IVR voice packet, discards the call voice packet being forwarded, and forwards the IVR voice packet. Further, in a case of receiving a DTMF packet, because the priority of the DTMF packet is higher than the priority of the call voice packet, the forwarding server switches from the second state to the third state, updates the current priority indication information to indicate the priority of the DTMF packet, discards the call voice packet being forwarded, and forwards the DTMF packet. Furthermore, in a case of receiving an ending packet, the forwarding server switches from the second state to the first state, and updates the current priority indication information to indicate a priority of the initial state.

After receiving multiple channels of media packets, the forwarding server preferentially forwards an RTP media packet having a highest priority among all received to-be-forwarded RTP media packets, so that the forwarding server forwards only one channel of media packet to a receiving terminal, not only avoiding that the receiving terminal hear no sound which is caused by the fact that the receiving terminal cannot parse the multiple channels of media packets, but also ensuring that an important media packet is preferentially forwarded, thereby ensuring the normal user call and improving the user experience.

Based on the same technical concept, a forwarding server is provided according to an embodiment of the present disclosure. As shown in FIG. 13, a forwarding server 1300 includes: a receiving module 1301, an analysis module 1302, a processing module 1303 and a forwarding module 1304.

The receiving module 1301 is configured to receive a to-be-forwarded RTP media packet.

The analysis module 1302 is configured to determine a type of the to-be-forwarded RTP media packet.

The processing module 1303 is configured to determine a priority of the to-be-forwarded RTP media packet according to the type of the to-be-forwarded RTP media packet.

The forwarding module 1304 is configured to forward an RTP media packet having a higher priority of the received to-be-forwarded RTP media packet and an RTP media packet being currently forwarded.

In some embodiments, the forwarding module 1304 is configured to:
discard the received to-be-forwarded RTP media packet in a case that a priority of the RTP media packet being currently forwarded is higher than the priority of the received to-be-forwarded RTP media packet, where the priority of the RTP media packet being currently forwarded is indicated by priority indication information; and
discard the RTP media packet being currently forwarded and forward the received to-be-forwarded RTP media packet, in a case that the priority of the RTP media packet being currently forwarded is lower than the priority of the received to-be-forwarded RTP media packet.

In some embodiments, the forwarding module 1304 is further configured to:
update the priority indication information according to the priority of the received to-be-forwarded RTP media packet in the case that the priority of the RTP media packet being currently forwarded is lower than the priority of the received to-be-forwarded RTP media packet.

In some embodiments, the forwarding module 1304 is further configured to:
accumulate a quantity of received to-be-forwarded RTP media packets that are discarded; and
lower the priority indicated by the priority indication information and re-accumulate the quantity of received to-be-forwarded RTP media packets that are discarded, in a case that the accumulated quantity is greater than a preset threshold.

In some embodiments, the forwarding module is further configured to: adjust the priority indicated by the priority indication information to a lowest priority, or a priority lower than a current priority indicated by the priority indication information, or a priority of a currently received to-be-forwarded RTP media packet.

In some embodiments, the forwarding module 1304 is further configured to:
adjust the priority indicated by the priority indication information to a lowest priority in a case that the received to-be-forwarded RTP media packet includes a session end identifier.

In some embodiments, the forwarding module 1304 is further configured to:
mix the RTP media packet being currently forwarded and the received to-be-forwarded RTP media packet in a case that the priority of the RTP media packet being currently forwarded is equal to the priority of the received to-be-forwarded RTP media packet and the RTP media packet being currently forwarded and the received to-be-forwarded RTP media packet correspond to different source terminals; and
forward an RTP media packet obtained by mixing to a receiving terminal.

In some embodiments, the analysis module 1302 is configured to:
determine the type of the to-be-forwarded RTP media packet according to a PT field and a CSRC field in a packet header of the to-be-forwarded RTP media packet.

In some embodiments, a type of an RTP media packet at least includes a call voice packet, an IVR voice packet, and a DTMF packet; and the analysis module 1302 is configured to:
obtain a value of the PT field in the packet header of the to-be-forwarded RTP media packet;
determine that the to-be-forwarded RTP media packet is a DTMF packet in a case that the value of the PT field is a first preset value;
obtain a value of the CSRC field in the packet header of the to-be-forwarded RTP media packet in a case that the value of the PT field is a second preset value,;
determine that the to-be-forwarded RTP media packet is an IVR voice packet in a case that the value of the CSRC field is a third preset value; and
determine that the to-be-forwarded RTP media packet is a call voice packet in a case that the value of the CSRC field is a fourth preset value.

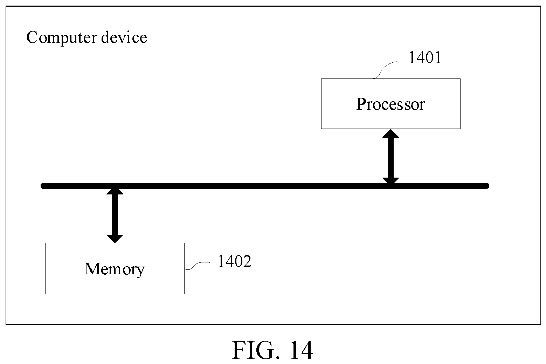

Based on the same technical concept, a computing device is provided according to an embodiment of the present disclosure. As shown in FIG. 14, the computing device includes at least one processor 1401, and a memory 1402 connected to the at least one processor. In this embodiment of the present disclosure, a specific connection medium between the processor 1401 and the memory 1402 is not limited. In FIG. 14, for example, the processor 1401 is connected to the memory 1402 via a bus. The bus may be classified into an address bus, a data bus, a control bus, or the like.

In this embodiment of the present disclosure, the memory 1402 stores instructions that are executable by the at least one processor 1401. The at least one processor 1401 may perform operations included in the media packet forwarding method by executing the instructions stored in the memory 1402.

The processor 1401 functions as a control center of the computing device. The processor may be connected to various parts of a terminal device by using various interfaces and lines. By running or executing the instructions stored in the memory 1402 and invoking data stored in the memory 1402, the processor may forward a media packet. Optionally, the processor 1401 may include one or more processing units. The processor 1401 may integrate an application processor and a modem processor. The application processor is mainly used to process an operating system, a user interface, an application, and the like. The modem processor is mainly used to process wireless communication. It may be understood that the modem processor may not be integrated into the processor 1401. In some embodiments, the processor 1401 and the memory 1402 may be implemented on the same chip. In some embodiments, the processor and the memory may be separately implemented on independent chips.

The processor 1401 may be a general purpose processor, such as a central processing unit (CPU), a digital signal processor, an application specific integrated circuit (ASIC), a field programmable gate array or another programmable logic device, a discrete gate or transistor logic device, or a discrete hardware component, and may implement or perform the methods, steps, and logical block diagrams disclosed in the embodiments of the present disclosure. The general purpose processor may be a microprocessor, any conventional processor, or the like. The steps of the methods disclosed with reference to the embodiments of the present disclosure may be directly performed by a hardware processor, or may be performed by using a combination of hardware and software modules in the processor.

The memory 1402, as a non-volatile computer-readable storage medium, may be used to store a non-volatile software program, a non-volatile computer-executable program and a module. The memory 1402 may include at least one type of storage medium. For example, the memory may include a flash memory, a hard disk, a multimedia card, a card type memory, a random access memory (RAM), a static random access memory (SRAM), a programmable read-only memory (PROM), a read-only memory (PROM), an electrically erasable programmable read-only memory (EEPROM), a magnetic memory, a magnetic disk, and an optical disc. The memory 1402 is any other medium that can be used to carry or store expected program code that has an instruction or data structure form, and that can be accessed by a computer, but is not limited thereto. The memory 1402 according to this embodiment of the present disclosure may also be a circuit or any other apparatus that can implement a storage function, and is configured to store program instructions and/or data.

Based on the same technical concept, a computer-readable storage medium is provided according to an embodiment of the present disclosure. The computer-readable storage medium stores a computer program executable by a computer device. The program, when run on the computer device, causes the computer device to perform operations of the media packet forwarding method.

A person skilled in the art is to understand that the embodiments of the present disclosure may be provided as a method or a computer program product. Therefore, the embodiments of the present disclosure may be implemented as only hardware embodiments, only software embodiments, or embodiments combining software with hardware. Moreover, the present disclosure may be implemented as a computer program product that is implemented on one or more computer-usable storage media (including but not limited to a disk memory, a CD-ROM, an optical memory, and the like) that include computer-usable program codes.

The present disclosure is described with reference to flowcharts and/or block diagrams of the method, the device (system), and the computer program product according to the embodiments of the present disclosure. It is to be understood that each procedure and/or block in the flowcharts and/or block diagrams and a combination of procedures and/or blocks in the flowcharts and/or block diagrams may be implemented by computer program instructions. These computer program instructions may be provided to a general-purpose computer, a dedicated computer, an embedded processor, or a processor of another programmable data processing device to generate a machine, so that the instructions executed by the computer or the processor of the programmable data processing device generate an apparatus for implementing functions specified in one or more procedures in the flowcharts and/or one or more blocks in the block diagrams.

These computer program instructions may also be stored in a computer-readable memory that can instruct a computer or another programmable data processing device to operate in a specific manner, so that the instructions stored in the computer-readable memory generate a product that includes an instruction apparatus. The instruction apparatus implements a specific function in one or more procedures in the flowcharts and/or in one or more blocks in the block diagrams.

These computer program instructions may also be loaded to a computer or another programmable data processing device, so that the computer or the another programmable device performs a series of operations and steps to generate computer-implemented processing. Thus, the instructions executed on the computer or the another programmable device provide steps for implementing a specific function in one or more processes in the flowcharts and/or in one or more blocks in the block diagrams.

Although preferred embodiments of the present disclosure have been described, persons skilled in the art can make additional changes and modifications to these embodiments once learning the basic creative concept. Therefore, the appended claims are intended to be construed as to cover the preferred embodiments and all changes and modifications falling within the scope of the present disclosure.

Apparently, a person skilled in the art can make various modifications and variations to the present disclosure without departing from the spirit and scope of the present disclosure. In this case, if the modifications and variations made to the present disclosure fall within the scope of the claims of the present disclosure and their equivalent technologies, the present disclosure is intended to include these modifications and variations.

## Claims

1. A media packet forwarding method, performed by a forwarding server, the method comprising:
receiving a to-be-forwarded RTP media packet;
determining a type of the to-be-forwarded RTP media packet;
determining a priority of the to-be-forwarded RTP media packet according to the type of the to-be-forwarded RTP media packet; and
forwarding an RTP media packet having a higher priority of the received to-be-forwarded RTP media packet and an RTP media packet being currently forwarded.

2. The method according to claim 1, wherein the forwarding an RTP media packet having a higher priority of the received to-be-forwarded RTP media packet and an RTP media packet being currently forwarded comprises:
discarding the received to-be-forwarded RTP media packet in a case that a priority of the RTP media packet being currently forwarded is higher than the priority of the received to-be-forwarded RTP media packet, wherein the priority of the RTP media packet being currently forwarded is indicated by priority indication information; and
discarding the RTP media packet being currently forwarded and forwarding the received to-be-forwarded RTP media packet, in a case that the priority of the RTP media packet being currently forwarded is lower than the priority of the received to-be-forwarded RTP media packet.

3. The method according to claim 2, further comprising:
updating the priority indication information according to the priority of the received to-be-forwarded RTP media packet in the case that the priority of the RTP media packet being currently forwarded is lower than the priority of the received to-be-forwarded RTP media packet.

4. The method according to claim 2, wherein after the discarding the received to-be-forwarded RTP media packet, the method further comprises:
accumulating a quantity of received to-be-forwarded RTP media packets that are discarded; and
lowering the priority indicated by the priority indication information and re-accumulating the quantity of received to-be-forwarded RTP media packet that are discarded, in a case that the accumulated quantity is greater than a preset threshold.

5. The method according to claim 4, wherein lowering the priority indicated by the priority indication information in the case that the accumulated quantity is greater than the preset threshold comprises:
adjusting the priority indicated by the priority indication information to a lowest priority, or a priority lower than a current priority indicated by the priority indication information, or a priority of a currently received to-be-forwarded RTP media packet.

6. The method according to claim 2, further comprising:
adjusting the priority indicated by the priority indication information to a lowest priority in a case that the received to-be-forwarded RTP media packet comprises a session end identifier.

7. The method according to any one of claims 2 to 6, further comprising:
mixing the RTP media packet being currently forwarded and the received to-be-forwarded RTP media packet in a case that the priority of the RTP media packet being currently forwarded is equal to the priority of the received to-be-forwarded RTP media packet and the RTP media packet being currently forwarded and the received to-be-forwarded RTP media packet correspond to different source terminals; and
forwarding an RTP media packet obtained by mixing to a receiving terminal.

8. The method according to any one of claims 1 to 7, wherein the determining a type of the to-be-forwarded RTP media packet comprises:
determining the type of the to-be-forwarded RTP media packet according to a PT field and a CSRC field in a packet header of the to-be-forwarded RTP media packet.

9. The method according to claim 8, wherein a type of an RTP media packet at least comprises a call voice packet, an IVR voice packet, and a DTMF packet; and
the determining the type of the to-be-forwarded RTP media packet according to a PT field and a CSRC field in a packet header of the to-be-forwarded RTP media packet comprises:
obtaining a value of the PT field in the packet header of the to-be-forwarded RTP media packet;
determining that the to-be-forwarded RTP media packet is a DTMF packet in a case that the value of the PT field is a first preset value;
obtaining a value of the CSRC field in the packet header of the to-be-forwarded RTP media packet in a case that the value of the PT field is a second preset value;
determining that the to-be-forwarded RTP media packet is an IVR voice packet in a case that the value of the CSRC field is a third preset value; and
determining that the to-be-forwarded RTP media packet is a call voice packet in a case that the value of the CSRC field is a fourth preset value.

10. A forwarding server, comprising:
a receiving module, configured to receive a to-be-forwarded RTP media packet;
an analysis module, configured to determine a type of the to-be-forwarded RTP media packet;
a processing module, configured to determine a priority of the to-be-forwarded RTP media packet according to the type of the to-be-forwarded RTP media packet; and
a forwarding module, configured to forward an RTP media packet having a higher priority of the received to-be-forwarded RTP media packet and an RTP media packet being currently forwarded.

11. The forwarding server according to claim 10, wherein the forwarding module is configured to:
discard the received to-be-forwarded RTP media packet in a case that a priority of the RTP media packet being currently forwarded is higher than the priority of the received to-be-forwarded RTP media packet, wherein the priority of the RTP media packet being currently forwarded is indicated by priority indication information; and
discard the RTP media packet being currently forwarded and forward the received to-be-forwarded RTP media packet, in a case that the priority of the RTP media packet being currently forwarded is lower than the priority of the received to-be-forwarded RTP media packet.

12. The forwarding server according to claim 11, wherein the forwarding module is further configured to:
update the priority indication information according to the priority of the received to-be-forwarded RTP media packet in the case that the priority of the RTP media packet being currently forwarded is lower than the priority of the received to-be-forwarded RTP media packet.

13. The forwarding server according to claim 11, wherein the forwarding module is further configured to:
accumulate a quantity of received to-be-forwarded RTP media packets that are discarded; and
lower the priority indicated by the priority indication information and re-accumulate the quantity of received to-be-forwarded RTP media packet that are discarded, in a case that the accumulated quantity is greater than a preset threshold.

14. The forwarding server according to claim 13, wherein the forwarding module is further configured to: adjust the priority indicated by the priority indication information to a lowest priority, or a priority lower than a current priority indicated by the priority indication information, or a priority of a currently received to-be-forwarded RTP media packet.

15. The forwarding server according to claim 11, wherein the forwarding module is further configured to:
adjust the priority indicated by the priority indication information to a lowest priority in a case that the received to-be-forwarded RTP media packet comprises a session end identifier.

16. A computing device, comprising a memory, a processor, and a computer program stored on the memory and executable by the processor, the processor, when executing the program, implementing operations of the method according to any one of claims 1 to 9.

17. A computer-readable storage medium, storing a computer program executable by a computer device, the program, when run on the computer device, causing the computer device to perform operations of the method according to any one of claims 1 to 9.
